# EUROPEAN PATENT APPLICATION

(11) **EP 4 530 605 A1**
(43) Date of publication of application: **02.04.2025**
(21) Application number: 24814661.5
(22) Date of filing: 05.08.2024
(51) Int. Cl.: G01N 19/04, G01N 3/12, G01N 3/06, G01N 3/04

(54) **PULL TEST DEVICE FOR WELDING OF CELL CURRENT COLLECTOR DISK**

(30) Priority: 11.08.2023 CN 202322172517 U
(71) Applicant: Eve Energy Co., Ltd., Huizhou, Guangdong 516006 (CN)
(72) Inventor: HE, Guoxin, Huizhou, Guangdong 516006 (CN); CHEN, Huan, Huizhou, Guangdong 516006 (CN); LIU, Mi, Huizhou, Guangdong 516006 (CN); SONG, Pengyuan, Huizhou, Guangdong 516006 (CN)
(74) Representative: Cabinet Beaumont
(86) International application number: PCT/CN2024/109874
(87) International publication number: WO 2024/245470

(57) **Abstract**

The present application relates to a tensile test apparatus for welding of a collection plate of a cell. The tensile test apparatus for welding of a collection plate of a cell includes a mount (1) and a test assembly (2). The mount (1) is configured to fix and install a core (3). The test assembly (2) includes a peel rod (21), a tension meter (22) and a first driving member (23). The peel rod (21) includes a pushing portion (211) and a connection portion (212) that are disposed at an included angle. The pushing portion (211) is capable of passing through a central hole (31) of the core (3) and being abutted against a side of the collection plate (4) at an end of the core (3) facing the central hole (31). The connection portion (212) is connected to the tension meter (22). The first driving member (23) is disposed on a side of the mount (1) at intervals. The first driving member (23) is drivingly connected to the tension meter (22) to drive the tension meter (22) to move along a direction of a central axis of the central hole (31) so that the pushing portion (211) pushes the collection plate (4) to be separated from the core (3).

## Description

This application claims priority to Chinese Patent Application No. 202322172517.6 filed with the China National Intellectual Property Administration (CNIPA) on Aug. 11, 2024, the disclosure of which is incorporated herein by reference in its entirety.

### TECHNICAL FIELD

The present application relates to the technical field of battery production devices, for example, a tensile test apparatus for welding of a collection plate of a cell.

### BACKGROUND

At present, a widely used process of manufacturing a lithium-ion battery generally includes processing a positive current collector, a separator and a negative current collector into a core in a winding manner and welding a collection plate on an end surface of the core. To ensure the product performance of the battery, after the collector plate is welded on the end of the core, and before a tab is closed, a tensile test is generally performed to detect whether the weld quality of the collector plate is qualified.

### TECHNICAL PROBLEM

In the related art, a maximum tension needed to peel off a collection plate when all solder joints of the collection plate are subjected to a stress at the same time is measured to detect the weld quality of the collection plate. Generally, half of the collection plate is pried up in advance, that is, half of the collection plate is separated from a core. The lifted collection plate is clamped by using a clamp to perform a tensile test of peeling off the other half of the collection plate from the core, and the maximum tension needed to peel off the entire collection plate is estimated by calculating double value according to the test value. The related art has the following situations: manual prying has difficulty in ensuring that a size of the peeled and lifted collection plate is exactly half the value of the area of the collection plate, the operation is cumbersome, and there are some estimates cause, resulting in a deviation in the test result.

### TECHNICAL SOLUTION

The present application provides a tensile test apparatus for welding of a collection plate of a cell. The tensile test apparatus for welding of a collection plate of a cell includes a mount and a test assembly. The mount is configured to fix and install a core. The test assembly includes a peel rod, a tension meter and a first driving member. The peel rod includes a pushing portion and a connection portion that are disposed at an included angle. The pushing portion is capable of passing through a central hole of the core and being abutted against a side of the collection plate at an end of the core facing the central hole. The connection portion is connected to the tension meter. The first driving member is disposed on a side of the mount at intervals. The first driving member is drivingly connected to the tension meter to drive the tension meter to move along a direction of a central axis of the central hole so that the pushing portion pushes the collection plate to be separated from the core.

### BENEFICIAL EFFECTS

The tension meter is driven by the first driving member to enable the pushing portion of the peel rod to pass through the central hole of the core to peel off the collection plate from the core, and the maximum tension for peeling off the collection plate from the core is recorded by using tension meter. The operation is simple, the work efficiency is high, the human intervention is reduced, the test accuracy is high, and the peel rod is simple in structure and convenient in production.

### BRIEF DESCRIPTION OF DRAWINGS

The present application will be described in detail according to drawings and possible embodiments.
FIG. 1 is a structure diagram of a tensile test apparatus for welding of a collection plate of a cell according to a possible embodiment of the present application.
FIG. 2 is an enlarged view of part A of FIG. 1.
FIG. 3 is a schematic diagram illustrating the matching between a test assembly and a cell according to a possible embodiment of the present application.
FIG. 4 is another structure diagram of a tensile test apparatus for welding of a collection plate of a cell according to a possible embodiment of the present application.

### Reference list

- 1: mount
- 11: second driving member
- 12: moving clamping block
- 121: clamping groove
- 1211: clamping platform
- 13: baseplate
- 14: fixed clamping block
- 15: guide rod
- 16: mounting plate
- 17: handle
- 18: guide hole
- 2: test assembly
- 21: peel rod
- 211: pushing portion
- 212: connection portion
- 2121: connection body
- 2122: support portion
- 22: tension meter
- 23: first driving member
- 3: core
- 31: central hole
- 4: collection plate
- 5: first mounting base
- 6: second mounting base

### EMBODIMENTS OF THE PRESENT INVENTION

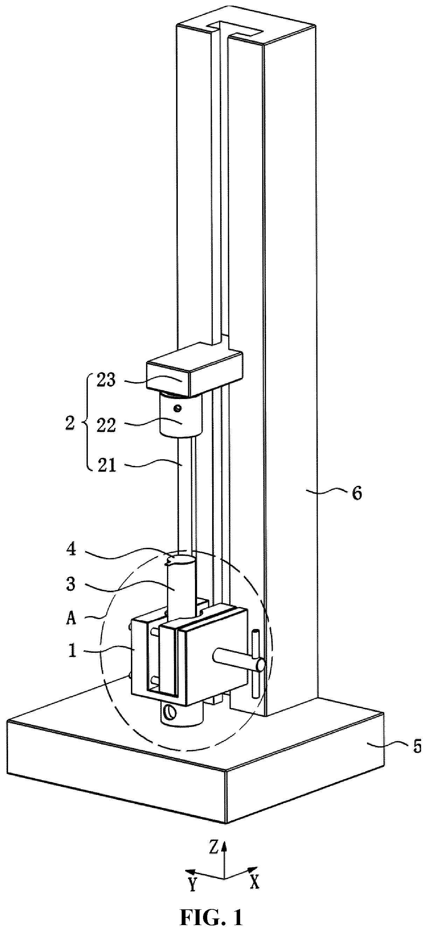

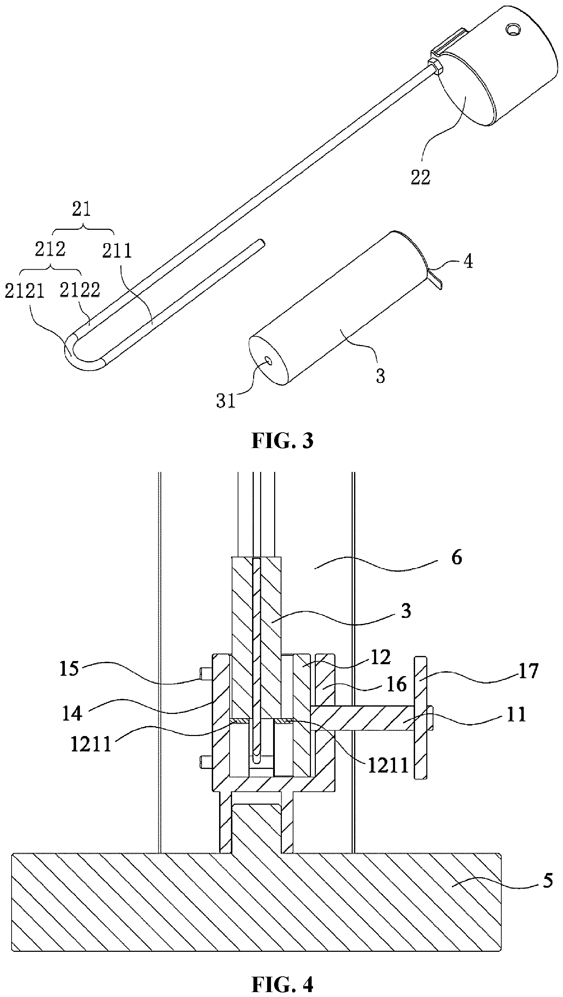

As shown in FIGS. 1 and 3, a tensile test apparatus for welding of a collection plate of a cell in an embodiment of the present application includes a mount 1 and a test assembly 2. The mount 1 is configured to fix and install a core 3. The test assembly 2 includes a peel rod 21, a tension meter 22 and a first driving member 23. The peel rod 21 includes a pushing portion 211 and a connection portion 212 that are disposed at an included angle. The pushing portion 211 is capable of passing through a central hole 31 of the core 3 and being abutted against a side of the collection plate 4 at an end of the core 3 facing the central hole. The connection portion 212 is connected to the tension meter 22. The first driving member 23 is disposed on a side of the mount 1 at intervals. The first driving member 23 is drivingly connected to the tension meter 22 to drive the tension meter 22 to move along a direction of a central axis of the central hole 31 (in this embodiment, the core 3 is placed vertically, and the direction of the axis of the central hole 31 is a Z direction in FIG. 1) so that the pushing portion 211 pushes the collection plate 4 to be separated from the core 3. It is to be noted that a length of the pushing portion 211 is greater than an axial length of the core 3. When the tensile test apparatus for welding of the collection plate of the cell needs to test the cell, the core 3 is fixed on the mount 1. In this case, the pushing portion 211 of the peel rod 21 passes through the central hole 31 of the core 3 and fits snugly around the collection plate 4, the tension meter 22 is driven by the first driving member 23 so that the pushing portion 211 pushes the collection plate 4 to be peeled off from the core 3, the maximum tension for peeling off the collection plate 4 from the core 3 is recorded by using the tension meter 22, and tension data displayed on the tension meter 22 is directly read, thereby completing the tension detection. The operation is simple, the work efficiency is high, the human intervention is reduced, the test accuracy is high, and the peel rod 21 is simple in structure and convenient in production.

For example, a central axis of the pushing portion 211 coincides with the central axis of the central hole 31. That is, the central axis of the pushing portion 211 coincides with a central axis of the collection plate 4, and a force center of the pushing portion 211 coincides with a center of the collection plate 4, so that a force point is located in the center of the collection plate 4 when the collection plate 4 is peeled off, a force point of the pushing portion 211 is stable, the detected separation force is more balanced and the detection stability is high.

For example, a cushion is disposed at an end of the pushing portion 211 facing the collection plate 4, that is, a cushion is disposed at an end of the pushing portion 211 in contact with the collection plate 4, so as to avoid direct hard contact between the pushing portion 211 and the collection plate 4 and prevent the collection plate 4 from being punctured by the pushing portion 211. Moreover, the cushion can effectively prevent slippage, thereby avoiding a displacement when the pushing portion 211 pushes the collection plate 4 to be peeled off and ensuring the stability of peeling off the collection plate 4 from the core 3.

For example, as shown in FIGS. 1 and 3, the connection portion 212 includes a connection body 2121 and a support portion 2122, the pushing portion 211 and the support portion 2122 are disposed at intervals in a first direction (the first direction is an X direction in FIG. 1), the X direction and the direction of the central axis of the central hole 31 are disposed at an included angle, an end of the pushing portion 211 facing away from the collection plate 4 is connected to the support portion 2122 via the connection body 2121, an end of the support portion 2122 facing away from the connection body 2121 is connected to the first driving member 23, and a length dimension of the support portion 2122 is greater than or equal to a length dimension of the pushing portion 211. That is, the support portion 2122, the connection body 2121 and the pushing portion 211 are of a U-shaped structure. Compared with other structures, in the peel rod 21 with the U-shaped structure, a pulling force direction of the support portion 2122 is consistent with a pushing force direction of the pushing portion 211 so that the force transfer is relatively balanced and the force components in other directions are reduced, thereby effectively improving the test accuracy of the tension meter 22. The first driving member 23 is one of the linear driving mechanisms such as a cylinder, an oil cylinder or an electric cylinder. Here, the cylinder may be directly used. The cylinder drives the tension meter 22 to move along direction of the axis of the central hole 31 and towards a direction facing away from the mount 1 so that the tension meter 22 pulls the peel rod 21.

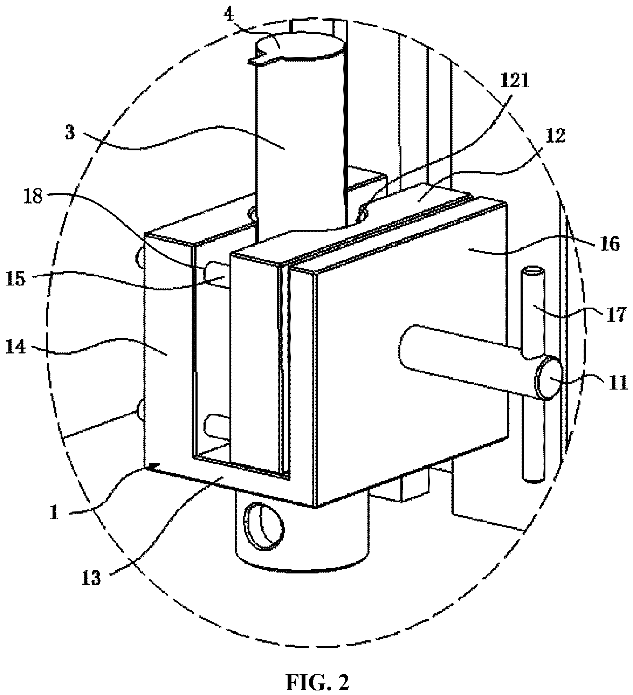

In this embodiment, as shown in FIG. 2, the mount 1 includes a second driving member 11 and at least two clamping blocks, a clamping groove 121 is disposed on each of the at least two clamping blocks, all clamping grooves 121 enclose to form a clamping space configured to clamp the core 3, at least some clamping blocks are moving clamping blocks 12, the second driving member 11 is drivingly connected to the moving clamping block 12 to drive the moving clamping block 12 to move to clamp or release the core 3. A groove bottom of the clamping groove 121 is configured as an arc surface to improve a degree of fitness between the clamping block and the core 3. The second driving member 11 drives the moving clamping blocks 12 to clamp the core 3 so that the mount 1 can adapt to fixing cores 3 with different sizes, thereby implementing tensile tests for welding between cores 3 with different sizes and collection plates 4 with different sizes and improving the compatibility of the tensile test apparatus for welding of the collection plate of the cell.

For example, as shown in FIG. 4, a clamping platform 1211 is disposed on a groove wall of the clamping groove 121 and protrudes towards a central axial direction of the clamping space, a portion of the core 3 is abutted against the clamping platform 1211, and an avoidance space for avoiding the central hole 31 is formed between two clamping platforms 1211 at intervals. It is to be noted that the clamping platform 1211 does not affect the exposure of the central hole 31 to avoid that the peel rod 21 cannot pass through the central hole 31. The clamping platform 1211 facilitates the placement of the core 3 when the mount 1 clamps the core 3, that is, a relative height of the core 3 in the clamping space can be positioned, thereby facilitating the fixation of the core 3. For example, when the core 3 is installed on the clamping platform 1211, a certain interval exists between the pushing portion 211 and the collection plate 4, thereby avoiding affecting the tensile test result between the collection plate 4 and the core 3 due to connection strength generated by contact between the pushing portion 211 and the collection plate 4 before the first driving member 23 drives the tension meter 22 to test the tensile force.

For example, as shown in FIGS. 1 and 2, the mount 1 further includes a baseplate 13, some clamping blocks are fixed clamping blocks 14, the fixed clamping block 14 is fixed on the baseplate 13, a guide rod 15 is disposed on the moving clamping block 12, and a guide hole 18 is disposed in the fixed clamping block 14, where the guide rod 15 is slidably connected to the guide hole 18. In this embodiment, two clamping blocks are disposed in total, that is, a fixed clamping block 14 and a moving clamping block 12 are disposed in a second direction at intervals (the second direction is a Y direction in FIG. 1). When the second driving member 11 drives the moving clamping block 12 to move, the matching between the guide rod 15 and the guide hole 18 can effectively improve a movement guide of the moving clamping block 12, prevent a position offset of the moving clamping block 12 and ensure a degree of fitness between the clamping block and the core 3. In addition to the guide rod 15 being disposed in the moving clamping block 12 and the guide hole 18 being disposed in the fixed clamping block 14, the guide rod 15 may also be disposed in the fixed clamping block 14, and the guide hole 18 may also be disposed in the moving clamping block 12.

For example, as shown in FIG. 2, the mount 1 further includes a mounting plate 16, the mounting plate 16 is disposed on a side of the moving clamping block 12 facing away from the fixed clamping block 14 at intervals, the second driving member 11 is rotatably connected to the mounting plate 16, one end of the second driving member 11 is connected to the moving clamping block 12, and the other end of the second driving member 11 passes through the mounting plate 16 and extends beyond the mount 1. In this embodiment, the second driving member 11 is a lead screw, a lead screw nut is embedded in the mounting plate 16, the lead screw is slidably connected to the lead screw nut, the lead screw is rotatably connected to the moving clamping block 12, and a handle 17 is disposed on one end of the lead screw facing away from the moving clamping block 12. An operator rotates the handle 17 so that the lead screw rotates relative to the mounting plate 16, thereby pushing the moving clamping block 12 to move. The manner of manual driving by using the handle 17 is conducive to controlling the movement accuracy of the moving clamping block 12. Of course, the lead screw may also be driven by using an electric motor to implement the automatic clamping of the core 3. In other embodiments, the second driving member 11 may also be a screw, and a threaded hole is disposed in the mounting plate 16. The screw is matched with the threaded hole through a screw thread, and the screw is rotated to implement the push of the moving clamping block 12.

In other embodiments, as shown in FIG. 3, the peel rod 21 is detachably connected to the tension meter 22. For example, a through hole is disposed in the peel rod 21, and a threaded hole is disposed in the tension meter 22. A bolt is screwed to the threaded hole through the through hole so that the peel rod 21 is connected to the tension meter 22. The installation and detachment of the peel rod 21 and the tension meter 22 are convenient in the manner of connecting the peel rod 21 to the tension meter 22 through the bolt, thereby facilitating the replacement of the peel rod 21 when the peel rod 21 is bent or worn.

For example, the connection body 2121 is movably connected to the support portion 2122 so that spacing between the support portion 2122 and the pushing portion 211 is adjustable. The spacing between the support portion 2122 and the pushing portion 211 is adjusted to adapt to cores 3 with different sizes. For example, when a core 3 with a relatively small diameter size is tested, the spacing between the support portion 2122 and the pushing portion 211 is shortened, and a distance of a force arm between the support portion 2122 and the pushing portion 211 is reduced so that a force felt by the support portion 2122 is closer to a force felt by the pushing portion 211, the test accuracy is higher and the peel rod 21 is not easy to bend. Of course, the spacing between the support portion 2122 and the pushing portion 211 may also be adjusted through the movable connection between the connection body 2121 and the pushing portion 211 in addition to the movable connection between the connection body 2121 and the support portion 2122. For example, a manner of the movable connection may be that a waist hole is disposed in the connection body 2121, a threaded hole is disposed in the support portion 2122 or the pushing portion 211 and a bolt passes through the waist-shaped hole and is screwed to the threaded hole to implement the connection between the connection body 2121 and the support portion 2122 or the pushing portion 211, and a position of the bolt at the waist-shaped hole is adjusted to adjust the spacing between the support portion 2122 and the pushing portion 211.

For example, the tensile test apparatus for welding of a collection plate of a cell further includes a first mounting base 5 and a second mounting base 6 that are disposed at an included angle. In this embodiment, the first mounting base 5 is disposed to be perpendicular to the second mounting base 6. The mount 1 is disposed on the first mounting base 5, and the first driving member 23 is disposed on the second mounting base 6 and is located above the mount 1. The first mounting base 5 and the second mounting base 6 facilitate determining the relative positions of the mount 1 and the first driving member 23 to improve the accuracy of driving the peel rod 21 by the first driving member 23 to peel off the core 3 in the mount 1.

A working principle of the tensile test apparatus for a collection plate 4 of a cell is as follows: the central hole 31 of the core 3 is sleeved on the pushing portion 211 and is abutted against the clamping platform 1211 of the fixed clamping block 14, the second driving member 11 is started so that the moving clamping block 12 clamps the core 3, the first driving member 23 is started to pull the tension meter 22 to drive the peel rod 21 to move upward so that the pushing portion 211 abuts against the collection plate 4 until the collection plate 4 is separated from the core 3, and the data on the tension meter 22 is read. The tensile test apparatus for a collection plate 4 of a cell is simple in structure, convenient in operation and simple in measurement and has high test efficiency.

In the description of the present application, it is to be understood that the orientation or position relationships indicated by terms "above", "below" and the like are the orientation or position relationships shown in the drawings, merely for ease of description and simplifying operations, and these relationships do not indicate or imply that the referred device or component has a specific orientation and is constructed and operated in a specific orientation, and thus it is not to be construed as a limitation to the present application.

In the description of the specification, the description of reference terms "an embodiment" and the like means that specific features, structures, materials or characteristics described in connection with the embodiment are included in at least one embodiment or example of the present application. In the specification, the schematic representation of the preceding terms does not refer to the same embodiment.

## Claims

1. A tensile test apparatus for welding of a collection plate of a cell, comprising:
a mount configured to fix and install a core; and
a test assembly comprising a peel rod, a tension meter and a first driving member, wherein the peel rod comprises a pushing portion and a connection portion that are disposed at an included angle, the pushing portion is capable of passing through a central hole of the core and being abutted against a side of the collection plate at an end of the core facing the central hole, the connection portion is connected to the tension meter, the first driving member is disposed on a side of the mount at intervals, the first driving member is drivingly connected to the tension meter to drive the tension meter to move along a direction of a central axis of the central hole so that the pushing portion pushes the collection plate to be separated from the core.

2. The tensile test apparatus for welding of a collection plate of a cell according to claim 1, wherein a central axis of the pushing portion coincides with the central axis of the central hole.

3. The tensile test apparatus for welding of a collection plate of a cell according to claim 2, wherein the connection portion comprises a connection body and a support portion, the pushing portion and the support portion are disposed at intervals in a first direction, the first direction and the direction of the central axis of the central hole are disposed at an included angle, an end of the pushing portion facing away from the collection plate is connected to the support portion via the connection body, an end of the support portion facing away from the connection body is connected to the first driving member, and a length dimension of the support portion is greater than or equal to a length dimension of the pushing portion.

4. The tensile test apparatus for welding of a collection plate of a cell according to claim 3, wherein the peel rod is detachably connected to the tension meter.

5. The tensile test apparatus for welding of a collection plate of a cell according to claim 3, wherein the connection body is movably connected to the support portion so that spacing between the support portion and the pushing portion is adjustable; or
the connection body is movably connected to the pushing portion so that spacing between the support portion and the pushing portion is adjustable.

6. The tensile test apparatus for welding of a collection plate of a cell according to any one of claims 1 to 5, wherein the mount comprises a second driving member and at least two clamping blocks, a clamping groove is disposed on each of the at least two clamping blocks, all clamping grooves enclose to form a clamping space configured to clamp the core, at least one of the at least two clamping blocks is a moving clamping block, the second driving member is drivingly connected to the moving clamping block to drive the moving clamping block to clamp or release the core.

7. The tensile test apparatus for welding of a collection plate of a cell according to claim 6, wherein the mount further comprises a baseplate, at least one of the at least two clamping blocks is a fixed clamping block, and the fixed clamping block is fixed on the baseplate; and
a guide rod is disposed on the fixed clamping block, and a guide hole is disposed in the moving clamping block; or a guide rod is disposed on the moving clamping block, and a guide hole is disposed on the fixed clamping block; wherein the guide rod is slidably connected to the guide hole.

8. The tensile test apparatus for welding of a collection plate of a cell according to claim 7, wherein the mount further comprises a mounting plate, the mounting plate is disposed on a side of the moving clamping block facing away from the fixed clamping block at intervals, the second driving member is rotatably connected to the mounting plate, a first end of the second driving member is connected to the moving clamping block, and a second end of the second driving member passes through the mounting plate and extends beyond the mount.

9. The tensile test apparatus for welding of a collection plate of a cell according to claim 6, wherein a clamping platform is disposed on a groove wall of the clamping groove and protrudes towards a central axis direction of the clamping space, a portion of the core is abutted against the clamping platform, and an avoidance space for avoiding the central hole is formed between two clamping platforms at intervals.

10. The tensile test apparatus for welding of a collection plate of a cell according to any one of claims 1 to 5, further comprising a first mounting base and a second mounting base that are disposed at an included angle, wherein the mount is disposed on the first mounting base, and the first driving member is disposed on the second mounting base and is located above the mount.
